# EUROPÄISCHE PATENTSCHRIFT

(11) **EP 1 333 937 B1**
(45) Veröffentlichungstag und Bekanntmachung des Hinweises auf die Patenterteilung: **29.03.2006**
(21) Anmeldenummer: 01980318.8
(22) Anmeldetag: 01.09.2001
(51) Int. Cl.: B05D 1/28, B05C 1/02, C08J 5/12, B01L 3/00, C09J 5/00, B29C 65/48

(54) **VERFAHREN ZUM VERBINDEN VON KUNSTSTOFFTEILEN**
METHOD FOR THE CONNECTION OF PLASTIC PIECES
PROCEDE POUR ASSEMBLER DES PIECES EN MATIERE PLASTIQUE

(30) Priorität: 16.11.2000 DE 10056908
(43) Veröffentlichungstag der Anmeldung: 13.08.2003
(73) Patentinhaber: Merck Patent GmbH, 64293 Darmstadt (DE)
(72) Erfinder: JÖHNCK, Matthias, 44137 Dortmund (DE)
(86) Internationale Anmeldenummer: PCT/EP2001/010093
(87) Internationale Veröffentlichungsnummer: WO 2002/040181

(56) Entgegenhaltungen:
- EP-A- 0 675 183
- DE-A- 19 927 533

## Beschreibung

Die Erfindung betrifft ein Verfahren zum Verbinden von Bauteilen, das es ermöglicht, mikrostrukturierte Kunststoffteile mit hoher Präzision und ohne Beeinträchtigung der Strukturierung miteinander zu verkleben.

Miniaturisierte Analysensysteme, insbesondere solche mit mikrofluidischer Kanalstruktur gewinnen zunehmend an Bedeutung. Analyseeinheiten, die für derartige Anwendungen eingesetzt werden können, bestehen zumeist aus einer Bodenplatte (Substrat) und einem Deckel, zwischen denen sich Mikrokanalstrukuren, Elektroden und andere erforderliche Funktionalitäten, wie Detektoren, Reaktoren, Ventile etc. befinden.

Zu den Ansprüchen, die an ein mikrofluidisches Analysensystem gestellt werden müssen, gehört eine ausreichende Stabilität bezüglich mechanischer, chemischer, elektrischer und thermischer Einwirkungen. Für die Kanalstrukturen bedeutet mechanische Stabilität insbesondere Dimensions- und Volumenstabilität, was wichtige Voraussetzung für z.B. eine quantitativ reproduzierbare Probenaufgabe ist. Auch innere Druckstabilität der Mikrokanäle ist hinsichtlich des Einsatzes von z.B. Pumpen zum Befüllen der Mikrokanäle notwendig. Die verwendeten Materialien müssen selbstverständlich chemisch inert gegen das in den Kanälen transportierte Medium sein. Soweit Elektroden in den Kanal eingebracht werden, sollten diese mit hoher Genauigkeit (wenige µm) in dem Kanal positionierbar sein, um z.B. bei Verwendung als Detektorelektrode reproduzierbare Ergebnisse liefern zu können. Dazu ist auch Voraussetzung, daß die Kontaktflächen innerhalb des Kanals frei von Verunreinigungen sind und somit direkten Kontakt zum Medium in den Kanälen haben. Die Elektroden sollten ferner einen geringen Innenwiderstand und einen potentiell hohen Stromdurchfluß erlauben. Dies gilt insbesondere für sogenannte Leistungselektroden, mit denen in Abhängigkeit des verwendeten Mediums innerhalb der Kanäle ein elektrokinetischer Fluß erzeugt werden kann. Letztlich sollten die Elektroden leicht anschließbar sein.

Als Material zur Herstellung derartiger Analyseeinheiten dient häufig Silizium oder Glas. Nachteil dieser Materialien ist jedoch, daß sie sich nicht zur kostengünstigen Massenfabrikation der Analysensysteme eignen. Hierzu sind Materialien auf Kunststoffbasis wesentlich besser geeignet. Die Bauteile, wie Substrat und Deckel, die die eigentlichen Mikrostrukturen enthalten, können dann durch bekannte Verfahren, wie Heißprägen, Spritzguß oder Reaktionsguß kostengünstig hergestellt werden.

Für das Verschließen der resultierenden offenen Mikrostrukturen mit Deckeln hingegen gibt es bisher für Bauteile aus Kunststoff keine massenproduktionsfähigen Techniken. Dies gilt insbesondere für solche mit Mikrokanalstrukturen, bei denen zusätzlich metallische Elektroden an beliebigen Stellen innerhalb einer geschlossenen Kanalstruktur zu positionieren sind, welche direkten Kontakt zum Medium in den Kanälen haben.

In EP 0 738 306 wird ein Verfahren zum Verschließen von Mikrokanalstrukturen beschrieben, wobei ein gelöster Thermoplast auf das strukturierte Polymersubstrat aufgeschleudert wird. Dieser gelöste Thermoplast hat eine niedrigere Schmelztemperatur als die zu verklebenden Teile. Das thermische Verbinden von Deckel und Substrat erfolgt bei 140°C. Die Oberfläche des Kanals besteht somit aus dem thermoplastischen Klebstoff. Vergleichbare Verfahren sind in WO 9429400 und DE 198 46 958 beschrieben.

In US 5,571,410 werden mikrofluidische Strukturen mit Laser-Ablation in Kapton™ erzeugt und mit einer KJ® beschichteten Kapton™ -Folie verschweißt.

Becker et al. (H. Becker, W. Dietz, P. Dannberg, "Microfluidic manifolds by polymer hot embossing for µTAS applications," Proceedings Micro Total Analysis Systems 1998, 253-256, Banff, Canada) berichten über die Herstellung von mikrofluidischen Kanälen in heißgeprägtem PMMA, welche durch chemisch-unterstütztes Bonding mit PMMA-Deckeln verschlossen werden.

In WO 97/38300 wird ein Verfahren beschrieben, bei dem ein Deckel mit einer homogenen Polydimethylsiloxan (PDMS)-Klebschicht benetzt wird und mit einer Fluidikstruktur auf Polyacrylbasis verklebt wird.

Ein Verfahren zum thermischen Verbinden von Kunststoffteilen ist in WO 9951422 beschrieben. Hier wird eine Anordnung bestehend aus mikrostrukturiertem Bauteil und einem planaren Bauteil auf Temperaturen knapp oberhalb der Glasübergangstemperatur aufgeheizt. Nach Abkühlen unter die Glasübergangstemperatur erhält man ein mikrofluidsches System.

In WO 9925783 wird ein Verfahren beschrieben, bei dem ein mikrostrukturiertes Bauteil mit einem planaren Bauteil dadurch fest verbunden wird, dass ein organisches Lösungsmittel auf eines der beiden Kunststoffteile aufgebracht, das zweite Bauteil aufgesetzt und das Lösungsmittel dann abgepumpt wird. Durch das Anlösen der Kunststoffteile erhält man eine feste Verbindung.

Alle zuvor erwähnten Verfahren ermöglichen zwar, durch Verbinden eines Substrats mit einem Deckel Mikrokanalstrukturen zu erzeugen, sie erlauben jedoch nicht die Integration von Elektroden, welche direkten Kontakt zum Medium in den Kanälen haben.

In EP 0 767 257 ist ein Verfahren zur Integration von Elektroden in Mikrostrukturen beschrieben, doch erlaubt dieses Verfahren nicht eine flüssigkeitsisolierte Kontaktierung, da zum photochemischen Abscheiden des Metalles in den Kanälen diese mit Metallsalzlösungen gespült werden müssen.

Eine Methode zur Integration von Elektroden an beliebigen Stellen innerhalb eines mikrostrukturierten Kanals mit der Möglichkeit zur flüssigkeitsisolierten Kontaktierung der Elektroden wurde von Fielden et al. (P.R.-Fielden, S.J. Baldock, N.J. Goddard, L.W. Pickering, J.E. Prest, R.D. Snook, B.J.T. Brown, D.I. Vaireanu, "A miniaturized planar isotachophoresis separation device for transition metals with integrated conductivity detection", Proceedings Micro Total Analysis Systems '98, 323-326, Banff, Canada) beschrieben. Die Autoren haben eine mikrofluidische Kanalstruktur in Silikon (PDMS) abgeformt und drücken diese mechanisch gegen eine mit Elektroden (Kupfer) versehene Platine. Die Kanäle werden somit durch zwei unterschiedliche Materialien begrenzt. Um die resultierenden Kanäle geschlossen zu halten, muß ein konstanter mechanischer Druck aufrechterhalten werden. Durch den Druck auf das Silikonkissen treten in diesem System leicht Verformungen der Kanalstrukturen auf.

DE 199 27 533 beschreibt ein Verfahren zur Herstellung mikrostrukturierter Analysensysteme, bei dem ein Bauteil des Analysensystems mittels Tampondruck oder Walzenauftrag derart mit Klebstoff benetzt wird, dass die strukturierten Bereiche frei von Klebstoff bleiben. Anschließend werden die Bauteile justiert und zusammengepresst.

Aufgabe der vorliegenden Erfindung ist es, ein verbessertes Verfahren zum Verbinden von mikrostrukturierten Bauteilen zu entwickeln, das einfach zu handhaben ist und störungsfrei zu guten Ergebnissen führt. Weiterhin soll es ermöglichen, mikrofluide Analysensysteme bereitzustellen, deren Substrat und Deckel bevorzugt aus polymeren organischen Materialien bestehen und fest miteinander verbunden sind, und in die an jeder beliebigen Stelle Elektroden mit Möglichkeiten zur flüssigkeitsisolierten Kontaktierung eingebracht werden können.

Es wurde gefunden, daß das Zusammenkleben von mikrostrukturierten Bauteilen wesentlich zuverlässiger und einfacher durchgeführt werden kann, wenn der Klebstoff nicht direkt auf eines der Bauteile aufgetragen wird, sondern zunächst auf eine Trägerfolie. Von der Trägerfolie wird die Klebstoffschicht dann auf das mikrostrukturierte Bauteile übertragen und die Bauteile nach bekannten Methoden zusammengefügt. Auf diese Weise kann der Klebstoff auf der Trägerfolie vorhärten. Nach dem Übertrag auf das eigentliche Substrat besteht nicht mehr die Gefahr, daß er in die Kanalstruktur fließt.

Gegenstand der vorliegenden Erfindung ist daher ein Verfahren zum Verbinden von Bauteilen, gekennzeichnet durch folgende Verfahrensschritte:
a) Bereitstellen mindestens zweier Bauteile, wobei mindestens ein Bauteil mikrostrukturiert ist;
b) Aufbringen einer Klebstoffschicht auf eine Trägerfolie;
c) Vorhärten der Klebstoffschicht auf der Trägerfolie;
d) Übertragen der Klebstoffschicht von der Trägerfolie auf mindestens ein mikrostrukturiertes Bauteil;
e) Justieren und Zusammenfügen der Bauteile;
f) Aushärten der Klebstoffschicht.

In einer bevorzugten Ausführungsform bestehen die in Schritt a) bereitgestellten Bauteile aus Kunststoff.

In einer bevorzugten Ausführungsform wird in Schritt a) mindestens ein Bauteil bereitgestellt, das Dünnschichtelektroden aufweist.

In einer bevorzugten Ausführungsform erfolgt das Benetzen der Trägerfolie in Schritt b) mittels Walzenauftrag, Rakeltechnik oder Tampondruck.

In einer bevorzugten Ausführungsform wird nach dem Übertragen der Klebstoffschicht auf mindestens ein mikrostrukturiertes Bauteil (Schritt d)) ein Zwischenschritt d2) durchgeführt, bei dem eventuell über der Mikrostrukturierung, das heisst z.B. über dem Kanalsystem, liegende Teile der Klebstoffschicht mit Preßluft abgeblasen oder mittels einer weichen Bürste entfernt werden.

In einer bevorzugten Ausführungsform erfolgt das Übertragen der Klebstoffschicht von der Trägerfolie auf mindestens ein mikrostrukturiertes Bauteil in Schritt d) durch Zusammenfügen von Trägerfolie und mikrostrukturiertem Bauteil, Aufheizen auf eine Temperatur, bei der die Klebstoffschicht erweicht, die aber unterhalb der Erweichungs- oder Glasüberganstemperatur des Bauteils und der Trägerfolie liegt, Abkühlen und Abziehen der Trägerfolie.

In einer bevorzugten Ausführungsform erfolgt das Aushärten der Klebstoffschicht in Schritt f) durch Aufheizen der zusammengefügten Bauteile auf eine Temperatur, bei der die Klebstoffschicht erweicht, die aber unterhalb der Erweichungs- oder Glasüberganstemperatur der Bauteile liegt und anschließendem Abkühlen.

In einer weiteren bevorzugten Ausführungsform beträgt die Dicke der Klebstoffschicht 1 bis 20 µm.

Das erfindungsgemäße Verfahren eignet sich zum Zusammenfügen von Bauteilen aus Glas oder bevorzugt Kunststoff. Es ist insbesondere geeignet, um Bauteile zusammenzufügen, von denen mindestens eines mikrostrukturiert ist.

Besonders bevorzugt handelt es sich um Bauteile zur Herstellung eines mikrofluiden bzw. mikrostrukturierten Analysensystem. Diese Analysensysteme bestehen in der Regel aus einer Durchflußeinheit, die zumindest das Kanalsystem sowie optional Aussparungen zur Integration peripherer Einrichtungen aufweist, und peripheren Einrichtungen, wie Detektoren, Fluidikanschlüssen, Vorratsgefäßen, Reaktionskammern, Pumpen, Steuervorrichtungen etc., die in die Durchflußeinheit integriert bzw. daran angeschlossen werden können. Durch das erfindungsgemäße Verfahren können durch Zusammenfügen von mindestens zwei Bauteilen, wie z.B. Substrat und Deckel, Durchflußeinheiten mit Mikrokanalstrukturen erzeugt werden, die flüssigkeits- und/oder gasdicht verschlossen werden können. Substrat und Deckel sind fest miteinander verbunden. Zusätzlich können diese Systeme an jeder beliebigen Stelle des Kanalsystems Elektroden enthalten, die in freiem Kontakt zum Inneren des Kanals stehen, d.h. in das Kanalsystem hineinragen. Auch bestehen alle vier Seiten des Kanals überwiegend aus demselben Material.

Die Bauteile, die mit dem erfindungsgemäßen Verfahren zusammengeklebt werden können, sind bevorzugt aus kommerziell erhältlichen thermoplastischen Kunststoffen, wie PMMA (Polymethylmethacrylat), PC (Polycarbonat), Polystyrol oder PMP (Polymethylpenten), cycloolefinischen Homo- und Co-polymeren oder duroplastischen Kunststoffen, wie beispielsweise Epoxidharzen, bevorzugt ist PC, besonders bevorzugt PMMA. Bevorzugterweise bestehen alle Bauteile aus demselben Material.

Die Bauteile können nach dem Fachmann bekannten Methoden hergestellt werden. Kunststoffbauteile, die Mikrostrukturen enthalten, können beispielsweise durch etablierte Verfahren, wie Heißprägen, Spritzguß oder Reaktionsguß, produziert werden. Besonders bevorzugt werden Bauteile eingesetzt, die nach bekannten Techniken zur Massenproduktion vervielfältigt werden können. Mikrostrukturierte Bauteile können Kanalstrukturen mit Querschnittsflächen zwischen typischerweise 10 und 250000 µm² besitzen.

Die Elektroden, die in die erfindungsgemäßen Durchflußeinheiten eingebracht sind, werden typischerweise für die Generierung eines Flusses von Ionen oder für Detektionszwecke eingesetzt. Sie müssen eine hinreichende Haftfestigkeit auf den Kunststoffbauteilen aufweisen. Dies ist sowohl für das Zusammenfügen der einzelnen Bauteile als auch für den späteren Einsatz der Analysensysteme von Bedeutung.

Für die Wahl des Elektrodenmaterials ist vor allem die geplante Verwendung des Analysensystems ausschlaggebend. Da Systeme mit Mikrokanalstrukturen und integrierten Elektroden im wesentlichen im Bereich der Analytik zur Anwendung kommen, sollten die Elektroden aus chemisch inerten Materialien, wie z.B. Edelmetallen (Platin, Gold) bestehen.

Die Wahl derartiger Materialien und Methoden zur Aufbringung sind dem Fachmann z.B. aus DE 199 27 533 bzw. WO 00/77509 (PCT/EP 00/05206) und den dort zitierten Druckschriften bekannt.

In einer bevorzugten Ausführungsform des erfindungsgemäßen Verfahrens werden zwei Bauteile zusammengefügt. Ein Bauteil, z.B. das Substrat, ist mikrostrukturiert und weist das Kanalsystem und sonstige Aussparungen zum Anschluß weiterer Funktionalitäten, wie z.B. Fluidikanschlüssen, auf. Dieses Bauteil wird bevorzugt mittels eines Spritzgußverfahrens hergestellt.

Das zweite Bauteil, in diesem Fall ein Elektrodendeckel, weist keinerlei Mikrostrukturierung auf. Statt dessen sind auf diesem Bauteil alle Elektroden angeordnet.

Beispiele für Bauteile bzw. Durchflußeinheiten für mikrostrukturierte Analysensysteme, die nach dem erfindungsgemäßen Verfahren zusammengefügt werden können, finden sich in DE 199 27 533, 199 27 534 und 199 27 535 sowie den korrespondierenden Anmeldungen WO 00/77509, WO 00/77507, WO 00/77508, besonders in den darin aufgeführten und erläuterten Abbildungen.

Als Trägerfolien für das erfindungsgemäße Verfahren sind Polymerfolien aus Materialien geeignet, die von den verwendeten Klebstoffen oder den darin enthaltenen Lösungsmitteln nicht oder nur unwesentlich angegriffen werden und auf denen die Klebstoffe weniger gut haften als auf den Bauteilen. Bevorzugt bestehen die Trägerfolien aus Polyethylenterephthalat (Mylar®) oder Polypropylen. Es können auch Folien aus hochfluorierten Polymeren wie die FEP®-Folie der Firma Dupont verwendet werden. Die Dicke der Folien sollte derart sein, daß die Trägerfolien während des erfindungsgemäßen Verfahrens ausreichend stabil sind. Bevorzugt werden daher Trägerfolien mit einer Dicke von über 100 µm verwendet. Bei dem Zusammenkleben von Bauteilen mit einer, mit Ausnahme der Mikrostrukturierung, insgesamt ebenen Oberfläche, können die Trägerfolien eine beliebig große Dicke aufweisen und sogar, falls gewünscht, plattenartigen Charakter haben. Bevorzugt werden jedoch Trägerfolien mit einer Dicke zwischen 100 µm und 500 µm eingesetzt, da diese durch ihre Flexibilität beim Auflegen auf das mikrostrukturierte Bauteil in der Lage sind, Unebenheiten auszugleichen. Falls gewisse Unebenheiten des Bauteils durch die Trägerfolie nicht ausgeglichen werden können, entsteht an bestimmten Stellen kein direkter Kontakt zwischen dem Bauteil und der auf der Trägerfolie befindlichen Klebstoffschicht und es entsteht ein Defekt in der Klebstoffschicht auf dem Bauteil.

Als Klebstoffe sind erfindungsgemäß alle Klebstoffe geeignet, die gleichmäßig auf eine Trägerfolie aufgetragen werden können, dort vorgehärtet werden können und abschließend auf das mikrostrukturierte Bauteil übertragen werden können. Dies sind beispielsweise photopolymerisierbare Klebstoffe, druckinduzierte Klebstoffe oder auch bevorzugt thermoplastische Polymere. Falls notwendig, werden die Klebstoffe zunächst zum Auftrag auf die Trägerfolie in geeigneten Mengen Lösungsmittel gelöst. Wichtig ist, daß weder Klebstoff noch Lösungsmittel die Trägerfolie anlösen oder Spannungsrisse/Kristallisation verursachen. Die erfindungsgemäß verwendeten Klebstoffe zeigen eine geringere Haftung auf der Trägerfolie als auf dem Bauteil. Bei der Verwendung von theroplastischen Polymeren liegt deren Erweichungs- oder Glasübergangstemperatur unterhalb derjenigen der Bauteile und der Trägerfolie.
Der Fachmann ist in der Lage, entsprechend dem Material der Bauteile eine geeignete Trägerfolie und einen geeigneten Klebstoff auszuwählen. Für Bauteile aus Polycarbonat und insbesondere für Bauteile aus PMMA sind als Klebstoff beispielsweise Polyethylmethacrylat, Poly-n-propylmethacrylat, Poly-n-butylmethacrylat bzw. Copolymere dieser Polymere mit Methylmethacrylat oder bevorzugt Plexigum N743 oder Plexigum N742 (Copolymere von Methylmethacrylat und Poly-n-butylmethacrylat) der Firma Röhm, Deutschland, geeignet.
Diese Polymere werden mit Lösungsmittel versetzt, so daß sie eine für die jeweilige Auftragetechnik geeignete Viskosität haben. Bevorzugt wird z.B. eine Lösung von 30 Gewichtsprozent Plexigum N743 in Ethylmethylketon oder einer Mischung aus Ethanol und Ethylmethylketon (z.B. Ethanol/Ethylmethylketon, 90/10 (v/v)) verwendet.

Dementsprechend werden photopolymerisierbare Polymere, druckinduzierte Polymere oder thermoplastische Polymere oder Lösungen dieser Polymeren in Lösungsmitteln erfindungsgemäß als Klebstoff oder Klebstoffschicht bezeichnet.

Die Klebstoffschicht wird typischerweise in einer Dicke zwischen 1 und 20 µm auf die Trägerfolie aufgetragen. Dabei hängt die bevorzugte Dicke der Klebstoffschicht von der Beschaffenheit der zu verklebenden Bauteile ab. Falls die Bauteile kleine Unebenheiten oder Rauheiten auf der Oberfläche aufweisen, wird bevorzugt eine dickere Klebstoffschicht (eventuell über 20 µm) verwendet, um diese Unebenheiten auszugleichen. Für ideal gefertigte, wenig raue Bauteile reicht dagegen zumeist eine Dicke des Klebstoffauftrages von ca. 1 bis 2 µm aus.

Somit umfaßt das erfindungsgemäße Verfahren zum Verbinden von Bauteilen die folgenden Schritte:

### a) Bereitstellen der Bauteile:

Zumeist handelt es sich um zwei Bauteile, von denen eines mikrostrukturiert ist. Beispielsweise kann jedoch auch der Deckel- oder Boden-Teil aus zwei Bauteilen bestehen.

### b) Aufbringen der Klebstoffschicht auf die Trägerfolie:

Das Aufbringen von Klebstoffschichten auf Polymerfolien, d.h. erfindungsgemäß auf eine Trägerfolie, ist dem Fachmann bekannt. Der Auftrag erfolgt bevorzugt mittels Rakeltechnik oder mittels aus der Drucktechnik bekannten Verfahren, wie dem Auftrag über eine Rasterwalze oder ein Druckwerk. Es ist auch möglich, dünne Klebstofffolien z.B. zu extrudieren und dann auf eine Trägerfolie aufzulaminieren. Auch kann die Klebstoffschicht direkt auf die Trägerfolie auflaminiert werden. Der Übertrag der definiert dicken Klebstoffschicht von der Trägerfolie auf das mikrostrukturierte Bauteil ist wesentlich besser zu kontrollieren als der direkte Auftrag des Klebstoffs auf das Bauteil, da beim Auftrag auf die Folie die Viskosität des Klebstoffes von geringerer Bedeutung ist.

### c) Vorhärten des Klebstoffs:

Auf der Folie kann dann die Eigenschaft des Klebstoffs verändert werden. Erfindungsgemäß wird dies als Vorhärten bezeichnet. Beispielsweise kann die Viskosität durch Verdampfen des Lösungsmittels, Vorpolymerisation, d.h. teilweise Polymerisation, des Klebstoffs oder vollständige Polymerisation des Klebstoffs erhöht werden. Auf diese Weise verringert sich beim Auftrag auf das Bauteil die Gefahr, dass Klebstoff in die Mikrostrukturierung, d.h. z.B. in Kanäle einfließt.

### d) Übertrag der Klebstoffschicht von der Trägerfolie auf das mikrostrukturierte Bauteil:

Hierzu ist von großer Bedeutung, dass die Haftung der Klebstoffschicht auf der Trägerfolie geringer ist als auf dem Bauteil. Das mikrostrukturierte Bauteil wird dann gleichmäßig und vollständig an allen Stellen, an denen nicht durch die Mikrostrukturierung Kanäle oder Einkerbungen bestehen, mit der Folie in Kontakt gebracht. Gegebenenfalls kann zur Verbesserung des Übertrags gleichmäßiger Druck ausgeübt werden. Eine genaue Positionierung der Trägerfolie zum Substrat ist für den Klebstoffübertrag im allgemeinen nicht notwendig, da die Trägerfolie gleichmäßig mit Klebstoff bedeckt ist und deutlich größer sein kann als das Bauteil.

Der Übertrag kann vereinfacht werden, wenn die Klebe- oder Hafteigenschaften des Klebstoffes, z.B. bei der Verwendung von thermoplatischen Polymeren durch leichtes Erhitzen, verändert werden. Dadurch wird der Klebstoff temporär etwas weniger viskos und läßt sich leichter übertragen. Das Aufwärmen kann z.B. in einem Ofen oder auch mittels geeigneter Strahlungsquellen, wie IR- oder Laserstrahler oder auch Mikrowellen erfolgen. Hierzu kann die Klebstoffschicht zusätzlich absorbierende Zusatzstoffe wie z.B. Aktivkohle enthalten.
Es ist zu beachten, daß nur auf eine Temperatur aufgeheizt wird, die zwar oberhalb der Erweichungs- bzw. Glasübergangstemperatur der Klebstoffschicht liegt, jedoch unterhalb der Erweichungs- bzw.

Glasübergangstemperatur der Trägerfolie oder des Zielsubstrats, d.h. des zu benetzenden Bauteils. Nach dem Aufheizen der Zwischenkonstruktion bestehend aus dem mikrostrukturierten Bauteil und der Trägerfolie, die durch die Klebstoffschicht verbunden sind, wird diese Zwischenkonstruktion unter die Erweichungs- bzw. Glasübergangstemperatur der Klebstoffschicht abgekühlt.

Abschließend wird die Trägerfolie abgezogen, wobei der Klebstoff an den Stellen, an denen direkter Kontakt zu dem mikrostrukturierten Bauteil bestand, vollständig auf das Bauteil übertragen wird. Somit sind alle Stellen, über die später Kontakt zu dem zweiten Bauteil bestehen wird, mit Klebstoff belegt bzw. benetzt.

In einigen Fällen kann es dazu kommen, dass die Klebstoffschicht als komplette Folie übertragen wird. Dies ist unerwünscht, da dadurch die Mikrostrukturierung, wie z.B. Kanäle, von der Klebstoffschicht abgedeckt würden. Das nachträglich aufgesetzte zweite Bauteil könnte zwar problemlos mit dem mikrostrukturierten Bauteil verbunden werden, es stünde jedoch nicht mehr in direktem Kontakt zu der Kanalstruktur des mikrostrukturierten Bauteils. Daher würden die Kanalwände nicht mehr auf allen Seiten von demselben Material gebildet und Elektroden auf dem aufgesetzten Bauteil würden keinen direkten Kontakt mit den Kanälen haben. Um dies auszuschließen, wird in einer bevorzugten Ausführungsform des erfindungsgemäßen Verfahrens nach dem Übertrag des Klebstoffs auf das mikrostrukturierte Bauteil dieses Bauteil mit Preßluft oder einem entsprechenden Gasstrom behandelt, um die eventuell über der Kanalstruktur liegende Klebstoffschicht abzublasen. Genauso ist je nach Beschaffenheit des Klebstoffs ein vorsichtiges Abbürsten der über der Kanalstruktur liegenden Klebstoffschicht mit einer weichen Bürste möglich.

### e) Justieren und Zusammenfügen der Bauteile

Nach dem Aufbringen des Klebstoffs wird das zweite Bauteil zu dem Substrat geeignet positioniert und aufgepreßt. Hierzu wird bevorzugt das mikrostrukturierte Bauteil, d.h. das Substrat mit dem aufgebrachten Klebstoff, in einer geeigneten Vorrichtung fixiert. Beispielsweise kann dazu eine Belichtungsmaschine verwendet werden und das Bauteil in der sonst für Silizium-Wafer vorgesehenen Position fixiert werden. Bei der Verwendung von photochemisch härtenden Klebern ist die Verwendung von starken Glasplatten als Preßfläche bevorzugt, da so direkt die Positionierung und die photochemische Härtung des Klebers durch Bestrahlung z.B. mit einer Hg-Lampe (Emissionswellenlänge 366 nm) durchgeführt werden kann. Das zweite Bauteil wird in der für die Belichtungsmaske vorgesehenen Position fixiert, indem er mit einer in die Glasplatte eingefrästen Vakuumvorrichtung gehalten wird. Falls, wie bevorzugt, sowohl die Bauteile als auch die zur Halterung verwendeten Glasplatten transparent sind, können durch diese Anordnung hindurch die Bauteile, d.h. z.B. der Deckel bezüglich des Substrates, justiert werden. Falls der Deckel über das Substrat hinausragt, kann dieser auch mechanisch gehalten werden.

Die Positionierung des Deckels auf dem Substrat kann für den Klebevorgang typischerweise neben einer optisch mechanischen Justage unter Zuhilfenahme von optischen Justagemarken auch passiv mechanisch mit Hilfe einer Einrastvorrichtung, optisch mechanisch ohne besondere Justagemarken oder elektrisch mechanisch mit Hilfe von elektrischen Marken (Kontakten) erfolgen.

Wie in DE 199 27 533 offenbart; können metallische Justagemarken auf dem Deckel in demselben Prozeßschritt mit gegebenenfalls benötigten Elektroden aufgebracht, d.h. bevorzugt aufgesputtert, werden. Auf diese Weise ist zur Anbringung von Justagemarken kein Mehraufwand notwendig. In dem gleichen Prozeßschritt können metallische Absorberschichten für ein späteres Laserschweissen mit aufgebracht werden. Auch die entsprechenden Gegenstrukturen auf dem Substrat erfordern keine zusätzliche Prozessierung, da diese gemeinsam mit den Kanalstrukturen in einem Abformschritt in das Substrat eingebracht werden. Für die optisch mechanische Justage muß zumindest ein Bauteil aus einem transparenten Kunststoff bestehen. Mit Hilfe der erfindungsgemäß aufgebrachten Justagemarken werden die beiden Bauteile mit einer Genauigkeit von mindestens ± 10 µm, typischerweise sogar ± 2 µm (z.B. Soll- zu Ist-Position der Detektorelektrode) zueinander positioniert und zusammengepreßt. Die hohe Positioniergenauigkeit unterstützt die Realisierung reproduzierbarer Analyseergebnisse.

### g) Aushärten der Klebstoffschicht

Das Aushärten der Klebstoffschicht erfolgt entsprechend der für den verwendeten Klebstoff notwendigen Bedingungen. Bei der Verwendung von thermoplastischen Klebstoffen, kann dies z.B. durch Aufheizen der zusammengepressten Bauteile erfolgen. Dabei sollte auf eine Temperatur aufgeheizt werden, bei der die Klebstoffschicht erweicht, die aber unterhalb der Erweichungs- oder Glasüberganstemperatur der Bauteile liegt. Anschließend wird abgekühlt.

Bei Klebstoffen, die noch nicht vollständig auspolymerisiert sind, erfolgt das Aushärten durch vollständige Polymerisation.

Bei photochemisch härtenden Klebstoffen erfolgt das Aushärten durch Bestrahlung mit Licht geeigneter Wellenlänge, beispielsweise mit einer UV-Lampe.

Wird der Aushärteprozeß des Klebstoffs außerhalb der zur Positionierung von Deckel und Substrat verwendeten Justagevorrichtung durchgeführt, können der metallisierte Deckel und das Substrat, nachdem sie zueinander justiert wurden, mittels Laserschweißen zunächst geheftet werden. Hiernach wird der Verbund aus der Justagevorrichtung genommen und in einer separaten Belichtungsappartur oder einem Ofen wird der verwendete Klebstoff ausgehärtet. Diese Vorgehensweise bedeutet eine Prozeßbeschleunigung und Vereinfachung, da das Aushärten nicht mehr in der Justagevorrichtung erfolgen muß.

Weitere Angaben zum Laserschweissen und einer entsprechenden Vorbereitung transparenter Materialien findet sich in DE 199 27 533.

Das erfindungsgemäße Verfahren bietet eine hohe Prozessicherheit. Die einzelnen Verfahrensschritte sind einfach durchzuführen. Insbesondere wird der im Stand der Technik notwendige Schritt des direkten Auftrags der Klebstoffschicht auf das strukturierte Bauteil umgangen. Der Übertrag der definiert dicken Klebstoffschicht von der Trägerfolie auf das mikrostrukturierte Bauteil ist wesentlich besser zu kontrollieren als der direkte Auftrag des Klebstoffs auf das Bauteil.

Der direkte Auftrag eines häufig niedrig viskosen Klebstoffs auf ein strukturiertes Bauteil kann nur von Fachleuten und unter entsprechender Prozeßkontrolle durchgeführt werden, da die Gefahr des Einfließens des Klebstoffs in die Mikrostrukturierung besteht. Genauso muß das Aufsetzen des zweiten Bauteils mit großer Sorgfalt erfolgen, damit durch den ausgeübten Druck kein Klebstoff in die Kanäle gelangt. Zudem besteht die Gefahr, dass der Klebstoff den Polymeruntergrund der beiden Bauteile anlöst und so auf dem zweiten Bauteil befindliche Dünnschichtelektroden von ihrem Untergrund abgelöst werden.

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Die vollständige Offenbarung aller vor- und nachstehend aufgeführten Anmeldungen, Patente und Veröffentlichungen, insbesondere der korrespondierenden Anmeldung DE 100 56 908.0, eingereicht am 16.11.2000, ist durch Bezugnahme in diese Anmeldung eingeführt.

### Beispiel

Auf eine Folie Mylar® 250 A der Firma DuPont wird mittels eines 20 µm Handrakels der Fa. Erichson, Deutschland, eine Lösung von Plexigum N743 der Firma Röhm in Ethylmethylketon (30 Gew.%) gleichmäßig aufgetragen. Das Lösungsmittel verdampft bei RT im leichten Luftstrom in weniger als 1 min. Die trockene Plexigum-Schichtdicke beträgt ca. 7 µm.

Anschließend wird die Folie mit der beschichteten Seite auf die strukturierte Seite des Bauteils aufgelegt. Diese Anordnung wird zwischen zwei Metallplatten mit einer Kraft von ca. 40 N bei einer Bauteilfläche von ca. 24 cm² beaufschlagt und in einem Umluftofen für 3 Minuten auf 75°C aufgeheizt. (Zu beachten ist, dass die gewählte Temperatur oberhalb der Erweichungs- bzw. Glasübergangstemperatur von Plexigum N743 (64°C) und unterhalb der Erweichungs- bzw. Glasübergangstemperatur von Mylar® 250 A (160°C) und des Zielsubstrates (PMMA, 100°C) liegt.)

Nach dem Abkühlen unter die Erweichungs- bzw. Glasübergangstemperatur der Klebstoffschicht, d.h. auf ca. 30°C, wird die Mylar® Folie abgezogen. Die dünne Klebstoffschicht bleibt dabei vollständig auf der PMMA-Oberfläche des mikrostrukturierten Bauteils zurück. Diese Oberfläche bildet später die Kontaktfläche zu dem zweiten Bauteil. Ein teilweise über den Kanälen befindlicher Klebstofffilm wird mit Reinraumpreßluft (3 bar) weggeblasen.

Das mit der Klebstoffschicht versehene mikrostrukturierte Bauteil wird in einer modifizierten Belichtungsmaschine an der Stelle fixiert, an welcher üblicherweise ein Silizium-Wafer liegt. Ein zweites mit Dünnschichtelektroden versehenes Bauteil aus PMMA, welches als Elektrodendeckel aufzufassen ist, wird mit einem Vakuumglashalter ebenfalls in der Belichtungsmaschine fixiert. Dieser Glashalter nimmt die Position ein, welche im Normbetrieb für die Belichtungsmaske vorgesehen ist. Zunächst werden die beiden Bauteile geeignet zueinander positioniert und dann so miteinander in Kontakt gebracht, dass das zweite Bauteil in direktem Kontakt zu der Klebstoffschicht des mikrostrukturierten Bauteils steht. Die Bauteile werden nun mit einer Kraft von ca. 20 N mit einem einfachen Kniehebelmechanismus aufeinandergepreßt. Zum Aushärten des Klebstoffs werden die beiden verbundenen Bauteile erneut für ca. 5 min auf eine Temperatur (hier: 75°C) oberhalb der Erweichungs- bzw. Glasübergangstemperatur von Plexigum N743 und unterhalb der Erweichungs- bzw. Glasübergangstemperatur von PMMA erwärmt. Anschließend wird auf ca. 30°C abgekühlt.

Man erhält eine Durchflußeinheit aus zwei Bauteilen, die flüssigkeitsdicht miteinander verbunden sind und deren Kanalstruktur Wände aus PMMA aufweist. Die in das Kanalsystem integrierten Elektroden sind genau positioniert und frei von Verschmutzungen durch Klebstoff.

## Patentansprüche

1. Verfahren zum Verbinden von Bauteilen, umfassend folgende Verfahrensschritte:
a) Bereitstellen mindestens zweier Bauteile, wobei mindestens ein Bauteil mikrostrukturiert ist;
b) Aufbringen einer Klebstoffschicht auf eine Trägerfolie;
c) Vorhärten der Klebstoffschicht auf der Trägerfolie;
d) Übertragen der Klebstoffschicht von der Trägerfolie auf mindestens ein mikrostrukturiertes Bauteil;
e) Justieren und Zusammenfügen der Bauteile;
f) Aushärten der Klebstoffschicht.

2. Verfahren nach Anspruch 1, **dadurch gekennzeichnet, dass** die in Schritt a) bereitgestellten Bauteile aus Kunststoff bestehen.

3. Verfahren nach einem der Ansprüche 1 oder 2, **dadurch gekennzeichnet, daß** das Aufbringen der Klebstoffschicht auf die Trägerfolie in Schritt b) mittels Walzenauftrag, Rakeltechnik oder Tampondruck erfolgt.

4. Verfahren nach einem der Ansprüche 1 bis 3, **dadurch gekennzeichnet, daß** nach dem Übertragen der Klebstoffschicht auf mindestens ein mikrostrukturiertes Bauteil (Schritt d)) ein Zwischenschritt d2) durchgeführt wird, bei dem über der Mikrostrukturierung liegende Teile der Klebstoffschicht mit Preßluft abgeblasen oder mit einer Bürste entfernt werden.

5. Verfahren nach einem der Ansprüche 1 bis 4, **dadurch gekennzeichnet, daß** das Übertragen der Klebstoffschicht von der Trägerfolie auf mindestens ein mikrostrukturiertes Bauteil in Schritt d) durch Zusammenfügen von Trägerfolie und mikrostrukturiertem Bauteil, Aufheizen auf eine Temperatur, bei der die Klebstoffschicht erweicht, die aber unterhalb der Erweichungs- oder Glasüberganstemperatur des Bauteils und der Trägerfolie liegt, Abkühlen und Abziehen der Trägerfolie erfolgt.

6. Verfahren nach einem der Ansprüche 1 bis 5, **dadurch gekennzeichnet, daß** das Aushärten der Klebstoffschicht in Schritt f) durch Aufheizen der zusammengefügten Bauteile auf eine Temperatur, bei der die Klebstoffschicht erweicht, die aber unterhalb der Erweichungs- oder Glasüberganstemperatur der Bauteile liegt, und anschließendem Abkühlen erfolgt.

7. Verfahren nach einem der Ansprüche 1 bis 6, **dadurch gekennzeichnet, daß** in Schritt b) eine Klebstoffschicht mit einer Dicke von 1 bis 20 µm aufgetragen wird.

## Claims

1. Method for joining components, comprising the following steps:
a) provision of at least two components, where at least one component is microstructured;
b) application of an adhesive layer to a support film;
c) pre-curing of the adhesive layer on the support film;
d) transfer of the adhesive layer from the support film to at least one microstructured component;
e) adjustment and joining of the components;
f) complete curing of the adhesive layer.

2. Method according to Claim 1, **characterised in that** the components provided in step a) consist of plastic.

3. Method according to one of Claims 1 and 2, **characterised in that** the application of the adhesive layer to the support film in step b) is carried out by means of roller application, knife coating or pad printing.

4. Method according to one of Claims 1 to 3, **characterised in that** the transfer of the adhesive layer to at least one microstructured component (step d)) is followed by an intermediate step d2) in which parts of the adhesive layer lying over the microstructuring are blown off using compressed air or removed using a brush.

5. Method according to one of Claims 1 to 4, **characterised in that** the transfer of the adhesive layer from the support film to at least one microstructured component in step d) is carried out by joining the support film and the microstructured component, heating the arrangement to a temperature at which the adhesive layer softens, but which is below the softening point or glass transition temperature of the component and the support film, cooling the arrangement, and peeling off the support film.

6. Method according to one of Claims 1 to 5, **characterised in that** the complete curing of the adhesive layer in step f) is carried out by heating the joined components to a temperature at which the adhesive layer softens, but which is below the softening point or glass transition temperature of the components, and subsequently cooling the arrangement.

7. Method according to one of Claims 1 to 6, **characterised in that** an adhesive layer having a thickness of 1 to 20 µm is applied in step b).

## Revendications

1. Procédé pour joindre des composants, comprenant les étapes qui suivent:
a) fourniture d'au moins deux composants, où au moins un composant est microstructuré;
b) application d'une couche adhésive sur un film de support;
c) prédurcissement de la couche adhésive sur le film de support;
d) transfert de la couche adhésive depuis le film de support jusqu'à l'au moins un composant microstructuré;
e) ajustement et jonction des composants;
f) achèvement du durcissement de la couche adhésive.

2. Procédé selon la revendication 1, **caractérisé en ce que** les composants fournis au niveau de l'étape a) sont constitués par de la matière plastique.

3. Procédé selon l'une des revendications 1 et 2, **caractérisé en ce que** l'application de la couche adhésive sur le film de support au niveau de l'étape b) est mise en oeuvre au moyen d'une application par rouleau, au moyen d'un dépôt par lame ou au moyen d'une impression par tampon.

4. Procédé selon l'une des revendications 1 à 3, **caractérisé en ce que** le transfert de la couche adhésive sur au moins un composant microstructuré (étape d)) est suivi par une étape intermédiaire d2) au niveau de laquelle des parties de la couche adhésive s'étendant au dessus de la microstructuration sont évacuées par soufflage en utilisant de l'air comprimé ou sont enlevées en utilisant une brosse.

5. Procédé selon l'une des revendications 1 à 4, **caractérisé en ce que** le transfert de la couche adhésive depuis le film de support jusqu'à au moins un composant microstructuré au niveau de l'étape d) est mis en oeuvre en joignant le film de support et le composant microstructuré, en chauffant l'agencement jusqu'à une température à laquelle la couche adhésive se ramollit, mais qui est au dessous du point de ramollissement ou de la température de transition vitreuse du composant et du film de support, en refroidissant l'agencement, et en enlevant par pelage le film de support.

6. Procédé selon l'une des revendications 1 à 5, **caractérisé en ce que** le durcissement complet de la couche adhésive au niveau de l'étape f) est mis en oeuvre en chauffant les composants joints jusqu'à une température à laquelle la couche adhésive se ramollit, mais qui est au dessous du point de ramollissement ou de la température de transition vitreuse des composants, et en refroidissant ensuite l'agencement.

7. Procédé selon l'une des revendications 1 à 6, **caractérisé en ce qu'**une couche adhésive présentant une épaisseur de 1 à 20 µm est appliquée au niveau de l'étape b).
